# FASCICULE DE BREVET EUROPEEN

(11) **EP 3 470 904 B1**
(45) Date de publication et mention de la délivrance du brevet: **01.01.2020**
(21) Numéro de dépôt: 18200809.4
(22) Date de dépôt: 16.10.2018
(51) Int. Cl.: G02B 7/182, G02B 26/10, H02K 37/00, H02K 16/02, H02K 17/34

(54) **DISPOSITIF A DOUBLE ENTRAINEMENT POUR BALAYAGE SEQUENTIEL ET PROCEDE ASSOCIE**
DOPPELANTRIEB FÜR SEQUENZIELLES SCANNEN UND ENTSPRECHENDES VERFAHREN
DUAL DRIVE DEVICE FOR SEQUENTIAL SCANNING AND CORRESPONDING METHOD

(30) Priorité: 16.10.2017 FR 1701073
(43) Date de publication de la demande: 17.04.2019
(73) Titulaire: Thales, 92400 Courbevoie (FR)
(72) Inventeur: VEZAIN, Stéphane, 06210 Mandelieu (FR); CHASSOULIER, Damien, 06370 Mouans-Sartoux (FR); STANEK, Didier, 06150 Cannes (FR); GUERCIO, Nicola, 06110 Le Cannet (FR)
(74) Mandataire: Honnet, Sylvie Florence Liliane

(56) Documents cités:
- WO-A1-2013/106701
- US-A- 5 277 076
- US-A1- 2012 133 249
- US-A1- 2013 088 567
- US-A1- 2014 340 474

## Description

L'invention concerne un dispositif à double entraînement pour balayage séquentiel et un procédé de double entraînement pour balayage séquentiel. L'invention peut s'appliquer au domaine spatial mais elle trouve application dans différents autres domaines tels que l'observation ou le positionnement d'un instrument quelconque par rapport à un autre. Nous prendrons comme exemple une application spatiale de l'invention.

Lors de certaines missions spatiales, il est nécessaire de pouvoir donner à un instrument optique, par exemple un miroir, des positions successives précises et rapidement. C'est notamment le cas des mécanismes de scans rotatifs auxquels il est demandé de s'arrêter dans des positions données successives. Par exemple, il peut être exigé de faire prendre à un miroir 49 positions successives, espacées de 0.69°, avec un laps de temps de 15 à 20 ms entre chaque position. Le miroir doit ensuite rejoindre une position de calibration, laquelle est tenue en pause pendant une certaine durée, par exemple 200 ms, puis il doit retourner à la position initiale du cycle de scans rotatifs. La durée totale du cycle ainsi que les temps de pause de calibration et de prises d'images sont imposées par des spécifications préalablement définies en fonction de la mission. Un système à double balayage rotatif est décrit dans le document US2013/088567A1.

Actuellement, l'obtention des positions successives des mécanismes de scans rotatifs est réalisée par génération d'un couple par un moteur commandé par un codeur optique précis afin d'atteindre chaque pas.

Le système doit être piloté en boucle fermée pour répondre au besoin de précision. L'inconvénient est qu'à chaque pas, une forte accélération est nécessaire et crée des couples exportés sur la plateforme. Ces couples peuvent faire vibrer l'instrument optique, donc dégrader la précision de prises d'images, faire dépointer le satellite et aussi perturber les éventuels autres instruments passagers. Pour supprimer tout ou partie des couples exportés, il est connu d'ajouter au mécanisme qui réalise la fonction principale un mécanisme dit de compensation, qui possède la même inertie et le même moteur et qui sera commandé avec le couple opposé. De cette façon, les couples s'additionnant, la plateforme n'est pas sollicitée par des vibrations (seulement le résiduel entre le couple généré par le mécanisme fonctionnel et celui généré par le mécanisme de compensation). Le mécanisme de compensation possède approximativement la même masse et le même encombrement que le mécanisme fonctionnel, ce qui double la masse et l'encombrement.

L'invention vise à pallier tout ou partie des problèmes cités plus haut en proposant un dispositif découplant la fonction de rotation continue et la fonction de pause grâce à un moteur qui entraîne le miroir en rotation à vitesse constante et un actionneur qui freine et ralentit le miroir au fur et à mesure du cycle du scan rotatif. Cette solution permet d'obtenir des positions stables de l'instrument optique sans avoir recours à un mécanisme de compensation.

A cet effet, l'invention a pour objet un dispositif à double entraînement pour balayage séquentiel comprenant :
- une partie mobile comprenant un bâti et un instrument optique positionné sur le bâti et mobile en rotation par rapport au bâti autour d'un premier axe de sorte à être immobilisé dans une pluralité de positions successives autour du premier axe,
- un moteur configuré pour rendre la partie mobile mobile en rotation autour du premier axe dans un premier sens de rotation à vitesse constante,
la partie mobile comprend un premier actionneur positionné sur le bâti et configuré pour actionner l'instrument optique en rotation autour du premier axe par rapport au bâti dans le premier sens de rotation pour passer d'une première position à une position successive de la pluralité de positions successives, et dans un second sens de rotation, opposé au premier sens de rotation, de sorte à ralentir ou immobiliser l'instrument optique dans la position successive.

Avantageusement, la partie mobile comprend en outre un dispositif de contre-inertie mobile en rotation par rapport au bâti autour du premier axe, un deuxième actionneur positionné sur le bâti configuré pour actionner le dispositif de contre-inertie en rotation autour du premier axe par rapport au bâti dans le premier ou second sens de rotation, inversement au sens de rotation de l'instrument optique.

Avantageusement, le premier et le deuxième actionneurs sont alignés.

Avantageusement, le premier et le deuxième actionneurs sont identiques.

Avantageusement, le premier et le deuxième actionneurs sont des actionneurs piézo-électriques.

Selon un autre mode de réalisation, la partie mobile comprend en outre un dispositif de contre-inertie mobile en rotation par rapport au bâti autour du premier axe, et le premier actionneur est configuré pour actionner le dispositif de contre-inertie en rotation autour du premier axe par rapport au bâti dans le premier ou second sens de rotation, inversement au sens de rotation de l'instrument optique.

Avantageusement, le premier actionneur comprend une première et une deuxième extrémités, la première extrémité étant reliée au dispositif de contre-inertie, la deuxième extrémité étant reliée à l'instrument optique, et le premier actionneur comprend une interface mécanique centrale fixée au bâti, de sorte à ce que la première extrémité entraîne en rotation autour du premier axe par rapport au bâti le dispositif de contre-inertie dans un sens inverse au sens de rotation de l'instrument optique.

L'invention concerne aussi un équipement spatial comprenant un tel dispositif à double entraînement pour balayage séquentiel.

L'invention concerne aussi un procédé de double entraînement pour balayage séquentiel d'un dispositif comprenant une partie mobile comprenant un bâti et un instrument optique positionné sur le bâti et mobile en rotation par rapport au bâti autour d'un premier axe de sorte à être ralenti ou immobilisé dans une pluralité de positions successives autour du premier axe, un moteur, la partie mobile comprenant un premier actionneur, le procédé comprenant les étapes suivantes :
- Mise en rotation à vitesse constante autour du premier axe de la partie mobile dans un premier sens de rotation par le moteur,
- Actionnement par le premier actionneur de l'instrument optique en rotation autour du premier axe par rapport au bâti dans un second sens de rotation, opposé au premier sens de rotation, de sorte à ralentir ou immobiliser l'instrument optique dans une première position parmi la pluralité de positions successives.

Selon un mode de réalisation, le procédé selon l'invention comprend en outre une étape d'actionnement par le premier actionneur de l'instrument optique en rotation autour du premier axe par rapport au bâti dans le premier sens de rotation pour passer d'une première position à une position successive de la pluralité de positions successives.

Avantageusement, le procédé comprend, après l'étape d'actionnement par le premier actionneur de l'instrument optique en rotation autour du premier axe par rapport au bâti dans le premier sens de rotation pour passer d'une première position à une position successive de la pluralité de positions successives, l'étape d'actionnement par le premier actionneur de l'instrument optique en rotation autour du premier axe par rapport au bâti dans un second sens de rotation, opposé au premier sens de rotation, de sorte à ralentir ou immobiliser l'instrument optique dans une position parmi la pluralité de positions successives.

L'invention sera mieux comprise et d'autres avantages apparaîtront à la lecture de la description détaillée d'un mode de réalisation donné à titre d'exemple, description illustrée par le dessin joint dans lequel :
- la figure 1 représente schématiquement le principe du dispositif à double entraînement pour balayage séquentiel selon l'invention,
- la figure 2A représente schématiquement un premier mode de réalisation d'un dispositif à double entraînement selon l'invention,
- la figure 2B est une vue de dessus du dispositif présenté à la figure 2A,
- la figure 3A représente schématiquement un autre mode de réalisation d'un dispositif à double entraînement selon l'invention,
- la figure 3B est une vue de dessus du dispositif présenté à la figure 3A,
- la figure 4A représente schématiquement un autre mode de réalisation d'un dispositif à double entraînement selon l'invention,
- la figure 4B est une vue de dessus du dispositif présenté à la figure 4A,
- la figure 5 représente schématiquement un équipement spatial comprenant un dispositif selon l'invention,
- la figure 6 représente les étapes d'un procédé de balayage séquentiel selon l'invention.

Par souci de clarté, les mêmes éléments porteront les mêmes repères dans les différentes figures.

Dans la description de la présente demande, l'invention est décrite dans le cadre d'une application spatiale. Comme cité précédemment, l'invention peut s'appliquer à tout autre domaine technique nécessitant la mise en œuvre d'un dispositif à double entraînement pour balayage séquentiel d'un instrument quelconque.

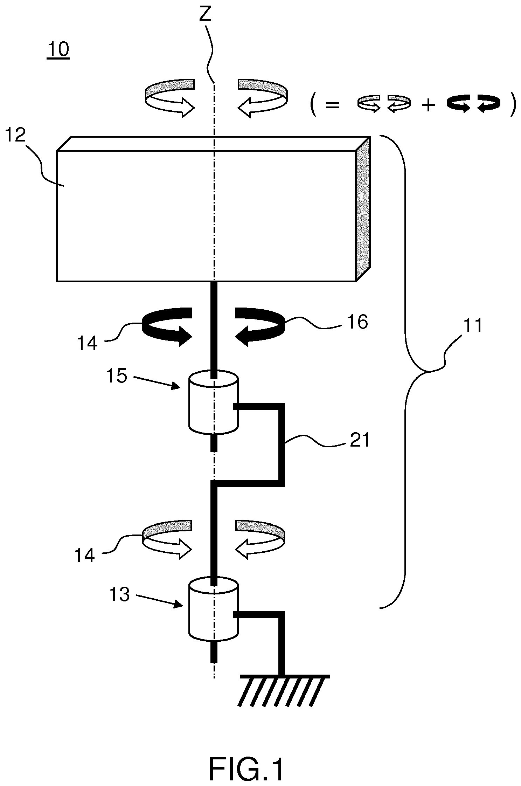

La **figure 1** représente schématiquement le principe du dispositif 10 à double entraînement pour balayage séquentiel selon l'invention. Le dispositif 10 comprend une partie mobile 11 comprenant un bâti 21 et un instrument optique 12 positionné sur le bâti 21 et mobile en rotation par rapport au bâti 21 autour d'un premier axe Z de sorte à être immobilisé dans une pluralité de positions successives autour du premier axe Z. Le dispositif 10 comprend un moteur 13 configuré pour rendre la partie mobile 11 mobile en rotation autour du premier axe Z dans un premier sens 14 de rotation à vitesse constante. Selon l'invention, la partie mobile 11 comprend un premier actionneur 15 relié au bâti 21 et configuré pour actionner l'instrument optique 12 en rotation autour du premier axe Z dans le premier sens 14 de rotation pour passer d'une première position à une position successive de la pluralité de positions successives, et dans un second sens 16 de rotation, opposé au premier sens 14 de rotation, de sorte à immobiliser ou ralentir l'instrument optique 12 dans la position successive.

Le moteur 13 entraîne en rotation autour du premier axe Z la partie mobile 11 à vitesse constante. La partie mobile 11 balaie la course totale nécessaire pour toutes les prises de vue. Le premier actionneur 15 est monté en série sur la partie mobile 11. Le premier actionneur 15 accélère et décélère successivement autant de fois qu'il y a de prises de vue à faire pendant la rotation autour du premier axe Z de la partie mobile 11 à vitesse constante. Il en résulte une annulation ou réduction successive de la vitesse du miroir par rapport à un référentiel absolu. Le premier actionneur 15 actionne l'instrument optique 12 dans un sens de rotation qui dépend de la phase du cycle dans laquelle on se trouve. Quand l'instrument optique passe d'une position à la position successive du cycle, le premier actionneur 15 actionne l'instrument optique 12 dans le premier sens 14 de rotation, identique au sens de rotation de la partie mobile à vitesse constante autour du premier axe Z. Autrement dit, le premier actionneur 15 contribue au déplacement de l'instrument optique 12 dans le premier sens 14 de rotation. Quand l'instrument optique 12 doit être immobilisé dans une position du cycle, le premier actionneur 15 actionne l'instrument optique 12 dans le deuxième sens 16 de rotation, inverse au premier sens 14 de rotation. Autrement dit, le premier actionneur 15 contre le déplacement de l'instrument optique 12 dans le premier sens 14 de rotation pour obtenir l'immobilisation ou le ralentissement de l'instrument optique 12 dans la position souhaitée du cycle. Cette succession de mise en rotation dans le premier ou le deuxième sens de rotation de la part du premier actionneur 15 peut se produire autant de fois qu'il y a de positions successives dans le cycle.

Typiquement et dans les ordres de grandeurs traditionnels, pour réaliser la rotation de l'instrument optique, le premier actionneur 15 doit exercer un couple maximal inférieur à 10 Nm, soit une force maximale de 100N sur un bras de levier de 10 cm.

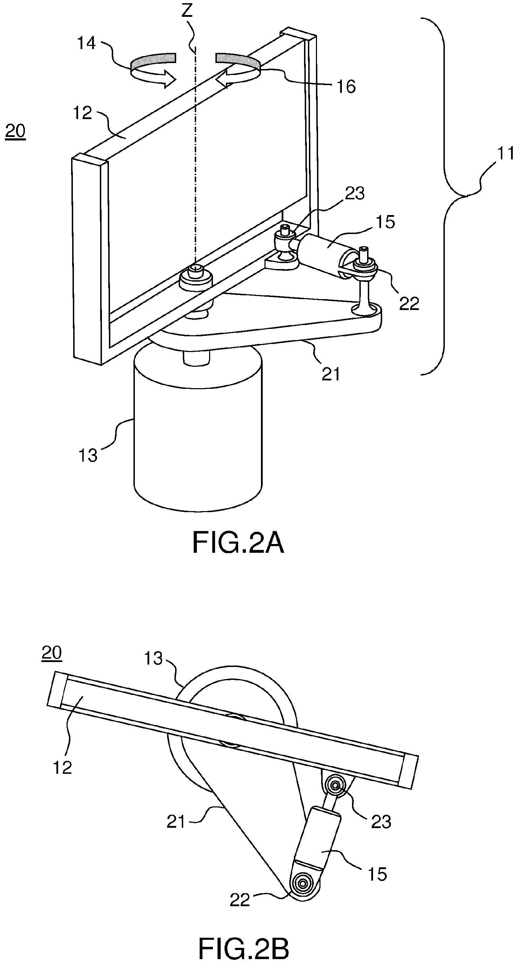

La **figure 2A** représente schématiquement un premier mode de réalisation d'un dispositif 20 à double entraînement selon l'invention. Comme expliqué précédemment, le dispositif 20 comprend une partie mobile 11 comprenant un bâti 21 et instrument optique 12 positionné sur le bâti 21 et mobile en rotation par rapport au bâti 21 autour du premier axe Z de sorte à être immobilisé dans une pluralité de positions successives autour du premier axe Z. Le dispositif 20 comprend un moteur 13 configuré pour rendre la partie mobile 11 mobile en rotation autour du premier axe Z dans un premier sens 14 de rotation à vitesse constante. Selon l'invention, la partie mobile 11 comprend un premier actionneur 15 positionné sur le bâti 21 configuré pour actionner l'instrument optique 12 en rotation autour du premier axe Z par rapport au bâti 21 dans le premier sens 14 de rotation pour passer d'une première position à une position successive de la pluralité de positions successives, et dans un second sens 16 de rotation, opposé au premier sens 14 de rotation, de sorte à immobiliser l'instrument optique 12 dans la position successive.

Sur le mode de réalisation présenté à la figure 2A, la partie mobile 11 comprend un bâti 21 sur lequel sont positionnés l'instrument optique 12 et le premier actionneur 15. Le bâti 21 peut être un plateau ou peut prendre une autre forme, non obligatoirement plate. La partie mobile 11 est ainsi rendue mobile en rotation autour du premier axe Z par rotation du bâti 21 autour du premier axe Z. Le bâti 21 est mis en rotation par le moteur 13. L'instrument optique 12 est mobile en rotation par rapport au bâti 21 autour du premier axe Z. En d'autres termes, l'instrument optique 12 dispose d'un degré de liberté en rotation autour du premier axe Z par rapport au bâti 21. Une première partie 22 du premier actionneur 15 est fixée sur le bâti 21 et une deuxième partie 23 du premier actionneur 15 est reliée à l'instrument optique 12.

La **figure 2B** est une vue de dessus du dispositif 20 présenté à la figure 2A. La première partie 22 du premier actionneur 15 étant fixée sur le bâti 21 et la deuxième partie 23 du premier actionneur 15 étant reliée à l'instrument optique 12, le premier actionneur 15 peut rendre l'instrument optique 12 mobile en rotation par rapport au bâti 21.

Dans le cas où le premier actionneur 15 est un actionneur piézo-électrique, le premier actionneur 15 va s'étirer ou se rétracter. Dans l'exemple représenté, en s'étirant, le premier actionneur 15 va mouvoir l'instrument optique 12 dans le premier sens 14 de rotation et en se rétractant, le premier actionneur 15 va mouvoir l'instrument optique 12 dans le deuxième sens 16 de rotation. Autrement dit, à la rotation du bâti 21 est ajoutée une translation du premier actionneur 15 qui permet le contrôle du positionnement de l'instrument optique 12, c'est-à-dire soit l'actionnement de l'instrument optique 12 en rotation autour du premier axe Z par rapport au bâti 21 dans le premier sens 14 de rotation pour passer d'une première position à une position successive de la pluralité de positions successives, soit dans un second sens 16 de rotation, opposé au premier sens 14 de rotation, de sorte à immobiliser l'instrument optique 12 dans la position successive ou à la ralentir. Dans le mode de réalisation représenté sur les figures 2A et 2B, la translation se fait dans un plan sensiblement perpendiculaire au premier axe Z. Les actionneurs piézo-électriques sont bien adaptés pour la mise en œuvre de l'invention, mais d'autres actionneurs, par exemple de types magnétique ou autres connus de l'Homme du métier, sont également envisageables.

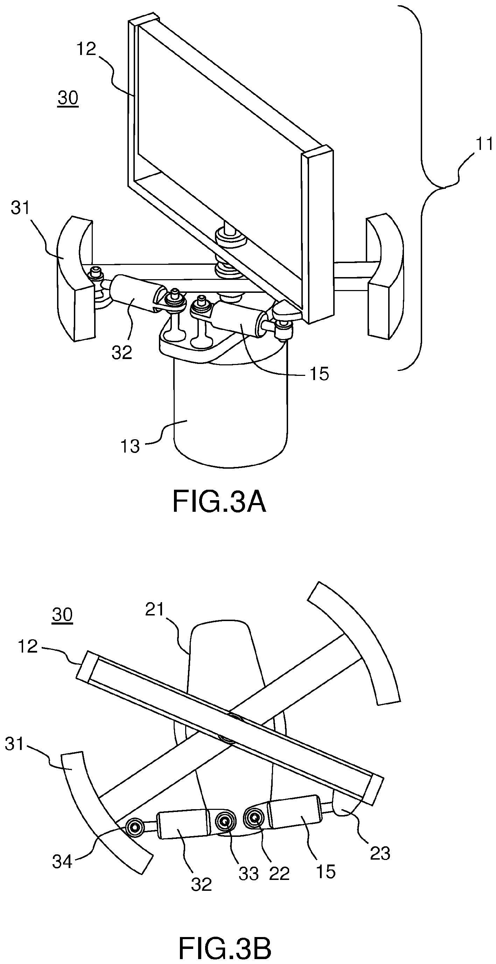

La **figure 3A** représente schématiquement un autre mode de réalisation d'un dispositif 30 à double entraînement selon l'invention. Le dispositif 30 représenté sur la figure 3A est identique au dispositif 20 représenté sur la figure 2A. La partie mobile 11 du dispositif 30 comprend en outre un dispositif de contre-inertie 31 mobile en rotation par rapport au bâti 21 autour du premier axe Z, et un deuxième actionneur 32 configuré pour actionner le dispositif de contre-inertie 31 en rotation autour du premier axe Z par rapport au bâti 21 dans le premier 14 ou second sens 16 de rotation, inversement au sens de rotation de l'instrument optique 12.

L'actionnement du dispositif de contre-inertie 31 dans le sens inverse du sens de rotation de l'instrument optique 12 permet d'annuler les couples exportés liés à l'accélération de l'instrument optique 12 lorsqu'il se déplace d'une position vers une autre position successive.

La **figure 3B** est une vue de dessus du dispositif présenté à la figure 3A. Dans ce mode de réalisation, le premier 15 et le deuxième 32 actionneurs sont alignés dans la direction tangentielle, ce qui permet d'annuler les efforts exportés. Une première partie 33 du deuxième actionneur 32 est fixée sur le bâti 21 et une deuxième partie 34 du deuxième actionneur 32 est reliée au dispositif de contre-inertie 31.

Pour la commande du premier et deuxième actionneurs 15, 32, il suffit alors d'appliquer les mêmes consignes avec des signes opposés. Quand le premier actionneur 15 s'étire pour déplacer l'instrument optique 12 dans le premier sens 14 de rotation, le deuxième actionneur 32 s'étire d'un étirement dans le sens opposé à l'étirement du premier actionneur 15, pour déplacer le dispositif de contre-inertie 31 dans le deuxième sens 16 de rotation.

On peut noter que les deux actionneurs 15, 32 ne sont pas nécessairement identiques. L'invention s'applique aussi à deux actionneurs différents. Dans ce cas, le pilotage des deux actionneurs serait différent.

De même, les deux actionneurs ne sont pas nécessairement alignés. Dans le cas où le premier et le deuxième actionneur 15, 32 ne sont pas alignés, il est préférable d'avoir un troisième actionneur pour annuler la composante radiale de l'effort exporté.

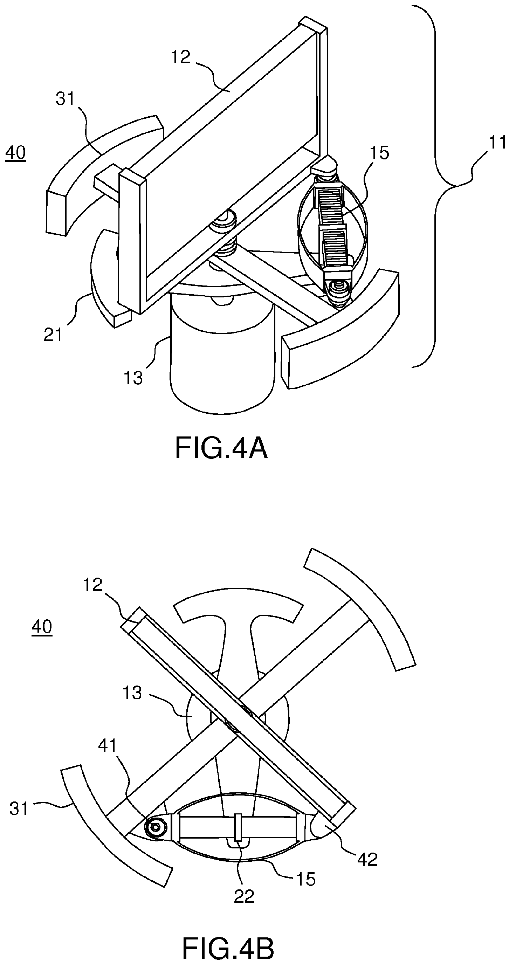

La **figure 4A** représente schématiquement un autre mode de réalisation d'un dispositif 40 à double entraînement selon l'invention. Le dispositif 40 représenté sur la figure 4A est identique au dispositif 30 représenté sur la figure 3A, mais ne comprend qu'un seul actionneur (le premier actionneur 15). Dans ce mode de réalisation, le premier actionneur 15 est configuré pour actionner le dispositif de contre-inertie 31 en rotation autour du premier axe Z par rapport au bâti 21 dans le premier 14 ou second 16 sens de rotation, inversement au sens de rotation de l'instrument optique 12. Cette configuration permet de n'avoir qu'un seul actionneur pour déplacer deux éléments de façon symétrique et inverse.

La **figure 4B** est une vue de dessus du dispositif présenté à la figure 4A. Le premier actionneur 15 comprend une première 41 et une deuxième 42 extrémités, la première extrémité 41 étant reliée au dispositif de contre-inertie 31, la deuxième extrémité 42 étant la deuxième partie 23 reliée à l'instrument optique 12, et le premier actionneur 15 comprend une interface mécanique centrale fixée au bâti 21, de sorte à ce que la première extrémité 41 entraîne en rotation autour du premier axe Z le dispositif de contre-inertie 31 dans un sens inverse au sens de rotation de l'instrument optique 12.

Autrement dit, comparé au dispositif 30 de la figure 3B, la première extrémité 41 correspond à la deuxième partie 34 du deuxième actionneur 32 reliée au dispositif de contre-inertie 31. La deuxième extrémité 42 correspond à la deuxième partie 23 du premier actionneur 15 reliée à l'instrument optique 12. Et la première partie 22 est fixée au bâti 21, correspondant aux deux parties 22 et 33 des premier et deuxième actionneurs 15, 32. Ainsi, un tel actionneur 15 est séparé en deux et présente une interface mécanique centrale et deux interfaces mécaniques latérales permettant un double actionnement égal et inversé.

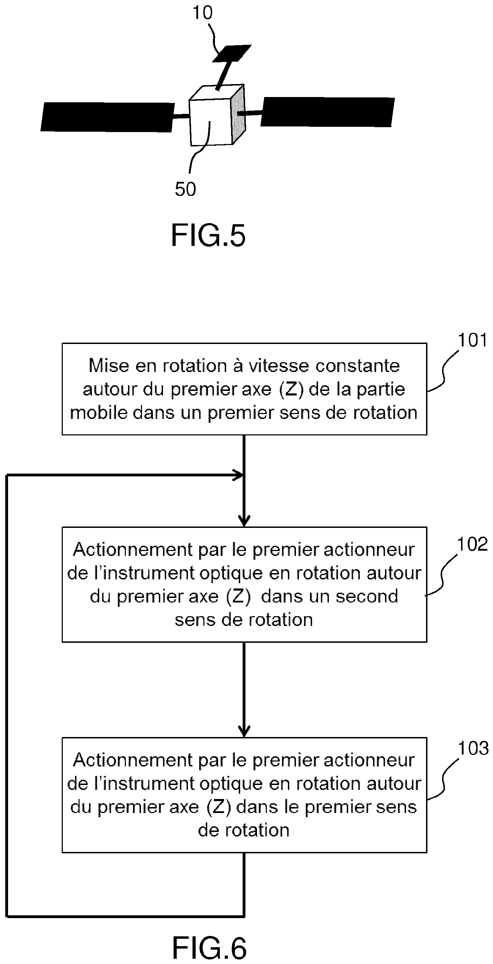

La **figure 5** représente schématiquement un équipement spatial 50 comprenant un dispositif 10 selon l'invention. L'équipement spatial peut comprendre d'autres modes de réalisation du dispositif selon l'invention, comme les modes de réalisation présentés précédemment aux figures 2A, 3A, 4A.

La **figure 6** représente les étapes d'un procédé de balayage séquentiel selon l'invention. Le procédé de double entraînement pour balayage séquentiel d'un dispositif comprenant une partie mobile 11, la partie mobile comprenant un bâti 21 et un instrument optique 12 positionné sur le bâti 21 et mobile en rotation par rapport au bâti 21 autour d'un premier axe Z de sorte à être ralenti ou immobilisé dans une pluralité de positions successives autour du premier axe Z, un premier actionneur 15, et un moteur 13, comprend une étape 101 de mise en rotation à vitesse constante autour du premier axe Z de la partie mobile 11 dans un premier sens 14 de rotation par le moteur 13, et une étape 102 d'actionnement par le premier actionneur 15 de l'instrument optique 12 en rotation autour du premier axe Z par rapport au bâti 21 dans un second sens 16 de rotation, opposé au premier sens 14 de rotation, par translation de la première extrémité 41 par rapport à la deuxième extrémité 42, de sorte à ralentir ou immobiliser l'instrument optique 12 dans une première position parmi la pluralité de positions successives.

Selon un mode de réalisation du procédé selon l'invention, le procédé peut comprendre en outre une étape 103 d'actionnement par le premier actionneur 15 de l'instrument optique 12 en rotation autour du premier axe Z par rapport au bâti 21 dans le premier sens 14 de rotation pour passer d'une première position à une position successive de la pluralité de positions successives.

## Revendications

1. Dispositif (10, 20, 30, 40) à double entraînement pour balayage séquentiel comprenant :
- une partie mobile (11) comprenant un bâti (21) et un instrument optique (12) positionné sur le bâti (21) et mobile en rotation par rapport au bâti (21) autour d'un premier axe (Z) de sorte à être immobilisé dans une pluralité de positions successives autour du premier axe (Z),
- un moteur (13) configuré pour rendre la partie mobile (11) mobile en rotation autour du premier axe (Z) dans un premier sens (14) de rotation à vitesse constante,
**caractérisé en ce que** la partie mobile (11) comprend un premier actionneur (15) positionné sur le bâti (21) comprenant une première (41) et une deuxième (42) extrémités, la première extrémité (41) étant fixée sur le bâti (21), la deuxième extrémité (42) étant reliée à l'instrument optique (12), et configuré pour translater la première extrémité (41) par rapport à la deuxième extrémité (42) de sorte à actionner l'instrument optique (12) en rotation autour du premier axe (Z) par rapport au bâti (21) dans le premier sens (14) de rotation pour passer d'une première position à une position successive de la pluralité de positions successives, et dans un second sens (16) de rotation, opposé au premier sens (14) de rotation, de sorte à ralentir ou immobiliser l'instrument optique (12) dans la position successive.

2. Dispositif (30, 40) selon la revendication 1, **caractérisé en ce que** la partie mobile (11) comprend en outre :
- un dispositif de contre-inertie (31) mobile en rotation par rapport au bâti (21) autour du premier axe (Z),
- un deuxième actionneur (32) positionné sur le bâti (21) configuré pour actionner le dispositif de contre-inertie (31) en rotation autour du premier axe (Z) par rapport au bâti (21) dans le premier (14) ou second (16) sens de rotation, inversement au sens de rotation de l'instrument optique (12).

3. Dispositif (30) selon la revendication 2, **caractérisé en ce que** le premier (15) et le deuxième (32) actionneurs sont alignés.

4. Dispositif (30) selon la revendication 2 ou 3, **caractérisé en ce que** le premier (15) et le deuxième (32) actionneurs sont identiques.

5. Dispositif (30) selon l'une quelconque des revendications 2 à 4, **caractérisé en ce que** le premier (15) et le deuxième (32) actionneurs sont des actionneurs piézo-électriques.

6. Dispositif (40) selon la revendication 1, **caractérisé en ce que** la partie mobile (11) comprend en outre :
- un dispositif de contre-inertie mobile (31) en rotation par rapport au bâti (21) autour du premier axe (Z),
et **en ce que** le premier actionneur (15) est configuré pour actionner le dispositif de contre-inertie (31) en rotation autour du premier axe (Z) par rapport au bâti (21) dans le premier (14) ou second (16) sens de rotation, inversement au sens de rotation de l'instrument optique (12).

7. Dispositif (40) selon la revendication 6, dans lequel le premier actionneur (15) comprend une première (41) et une deuxième (42) extrémités, la première extrémité (41) étant reliée au dispositif de contre-inertie (31), la deuxième extrémité (42) étant reliée à l'instrument optique (12), et en ce que le premier actionneur (15) comprend une interface mécanique centrale fixée au bâti (21), de sorte à ce que la première extrémité (41) entraîne en rotation autour du premier axe (Z) par rapport au bâti (21) le dispositif de contre-inertie (31) dans un sens inverse au sens de rotation de l'instrument optique (12).

8. Equipement spatial (50) comprenant un dispositif (10, 20, 30, 40) selon l'une des revendications précédentes.

9. Procédé de double entraînement pour balayage séquentiel d'un dispositif (10, 20, 30, 40) comprenant :
- une partie mobile (11) comprenant un bâti (21) et un instrument optique (12) positionné sur le bâti (21) et mobile en rotation par rapport au bâti (21) autour d'un premier axe (Z) de sorte à être ralenti ou immobilisé dans une pluralité de positions successives autour du premier axe (Z),
- un moteur (13),
la partie mobile (11) comprenant un premier actionneur (15) comprenant une première (41) et une deuxième (42) extrémités, la première extrémité (41) étant fixée sur le bâti (21), la deuxième extrémité (42) étant reliée à l'instrument optique (12),
**caractérisé en ce que** le procédé comprend les étapes suivantes :
- Mise en rotation (101) à vitesse constante autour du premier axe (Z) de la partie mobile (11) dans un premier sens (14) de rotation par le moteur (13),
- Actionnement (102) par le premier actionneur (15) de l'instrument optique (12) en rotation autour du premier axe (Z) par rapport au bâti (21) dans un second sens (16) de rotation, opposé au premier sens (14) de rotation par translation de la première extrémité (41) par rapport à la deuxième extrémité (42), de sorte à ralentir ou immobiliser l'instrument optique (12) dans une première position parmi la pluralité de positions successives.

10. Procédé selon la revendication 9, **caractérisé en ce qu'**il comprend en outre une étape (103) d'actionnement par le premier actionneur (15) de l'instrument optique (12) en rotation autour du premier axe (Z) par rapport au bâti (21) dans le premier sens (14) de rotation pour passer d'une première position à une position successive de la pluralité de positions successives.

11. Procédé selon la revendication 10, **caractérisé en ce qu'**il comprend, après l'étape (103) d'actionnement par le premier actionneur (15) de l'instrument optique (12) en rotation autour du premier axe (Z) par rapport au bâti (21) dans le premier sens (14) de rotation pour passer d'une première position à une position successive de la pluralité de positions successives, l'étape (102) d'actionnement par le premier actionneur (15) de l'instrument optique (12) en rotation autour du premier axe (Z) par rapport au bâti (21) dans un second sens (16) de rotation, opposé au premier sens (14) de rotation, de sorte à ralentir ou immobiliser l'instrument optique (12) dans une position parmi la pluralité de positions successives.

## Patentansprüche

1. Vorrichtung (10, 20, 30, 40) mit Doppelantrieb zum sequenziellen Abtasten, Folgendes beinhaltend:
- einen beweglichen Abschnitt (11), beinhaltend einen Rahmen (21) und ein optisches Instrument (12), welches an dem Rahmen (21) positioniert und drehbar in Bezug auf den Rahmen (21) um eine erste Achse (Z) in einer Weise beweglich ist, dass es in einer Vielzahl von aufeinanderfolgenden Positionen um die erste Achse (Z) immobilisiert wird,
- einen Motor (13), welcher konfiguriert ist, um den beweglichen Abschnitt (11) drehbar um die erste Achse (Z) in einer ersten Drehrichtung (14) mit konstanter Geschwindigkeit beweglich zu machen,
**dadurch gekennzeichnet, dass** der bewegliche Abschnitt (11) ein erstes Stellglied (15) beinhaltet, welches an dem Rahmen (21) positioniert ist, beinhaltend ein erstes (41) und ein zweites (42) Ende, wobei das erste Ende (41) an dem Rahmen (21) befestigt ist, wobei das zweite Ende (42) mit dem optischen Instrument (12) verbunden und konfiguriert ist, um das erste Ende (41) in Bezug auf das zweite Ende (42) in einer Weise zu verschieben, dass das optische Instrument (12) drehbar um die erste Achse (Z) in Bezug auf den Rahmen (21) in die erste Drehrichtung (14) betätigt wird, um von einer ersten Position zu einer darauffolgenden Position der Vielzahl von aufeinanderfolgenden Positionen zu gelangen, und in eine zweite Drehrichtung (16), welche der ersten Drehrichtung (14) entgegen läuft, um das optische Instrument (12) in der darauffolgenden Position zu verlangsamen oder zu immobilisieren.

2. Vorrichtung (30, 40) nach Anspruch 1, **dadurch gekennzeichnet, dass** der bewegliche Abschnitt (11) zudem Folgendes beinhaltet:
- eine Gegen-Trägheitsvorrichtung (31), welche drehend in Bezug auf den Rahmen (21) um die erste Achse (Z) beweglich ist,
- ein zweites Stellglied (32), welches an dem Rahmen (21) positioniert und konfiguriert ist, um die Gegen-Trägheitsvorrichtung (31) drehend um die erste Achse (Z) in Bezug auf den Rahmen (21) in die erste (14) oder die zweite (16) Drehrichtung zu betätigen, gegenläufig zur Drehrichtung des optischen Instrumentes (12).

3. Vorrichtung (30) nach Anspruch 2, **dadurch gekennzeichnet, dass** das erste (15) und das zweite (32) Stellglied ausgefluchtet sind.

4. Vorrichtung (30) nach Anspruch 2 oder 3, **dadurch gekennzeichnet, dass** das erste (15) und das zweite (32) Stellglied identisch sind.

5. Vorrichtung (30) nach einem der Ansprüche 2 bis 4, **dadurch gekennzeichnet, dass** das erste (15) und das zweite (32) Stellglied piezoelektrische Stellglieder sind.

6. Vorrichtung (40) nach Anspruch 1, **dadurch gekennzeichnet, dass** der bewegliche Abschnitt (11) zudem Folgendes beinhaltet:
- eine bewegliche Gegen-Trägheitsvorrichtung (31), welche in Bezug auf den Rahmen (21) um die erste Achse (Z) drehbar ist
und dadurch, dass das erste Stellglied (15) konfiguriert ist, um die Gegen-Trägheitsvorrichtung (31) drehend um die erste Achse (Z) in Bezug auf den Rahmen (21) in die erste (14) oder die zweite (16) Drehrichtung zu betätigen, gegenläufig zur Drehrichtung des optischen Instrumentes (12).

7. Vorrichtung (40) nach Anspruch 6, **dadurch gekennzeichnet, dass** das erste Stellglied (15) ein erstes (41) und ein zweites (42) Ende beinhaltet, wobei das erste Ende (41) mit der Gegen-Trägheitsvorrichtung (31) verbunden ist, wobei das zweite Ende (42) mit dem optischen Instrument (12) verbunden ist und dadurch, dass das erste Stellglied (15) eine am Rahmen (21) befestigte mechanische Schnittstelle beinhaltet, sodass das erste Ende (41) die Gegen-Trägheitsvorrichtung (31) drehend um die erste Achse (Z) in Bezug auf den Rahmen (21) in einer Richtung antreibt, welche gegenläufig zur Drehrichtung des optischen Instrumentes (12) ist.

8. Raumausrüstung (50), beinhaltend eine Vorrichtung (10, 20, 30, 40) nach einem der vorhergehenden Ansprüche.

9. Doppelantriebsverfahren zum sequenziellen Abtasten einer Vorrichtung (10, 20, 30, 40), Folgendes beinhaltend:
- einen beweglichen Abschnitt (11), beinhaltend einen Rahmen (21) und ein optisches Instrument (12), welches an dem Rahmen (21) positioniert und drehbar in Bezug auf den Rahmen (21) um eine erste Achse (Z) in einer Weise beweglich ist, dass es in einer Vielzahl von aufeinanderfolgenden Positionen um die erste Achse (Z) verlangsamt oder immobilisiert wird,
- einen Motor (13);
wobei der bewegliche Abschnitt (11) ein erstes Stellglied (15) beinhaltet, welches ein erstes (41) und ein zweites (42) Ende beinhaltet, wobei das erste Ende (41) am Rahmen (21) befestigt ist, wobei das zweite Ende (42) mit dem optischen Instrument (12) verbunden ist,
**dadurch gekennzeichnet, dass** das Verfahren folgende Schritte beinhaltet:
- Versetzen in Rotation (101) des beweglichen Abschnittes (11) mit konstanter Geschwindigkeit um die erste Achse (Z) in eine erste Drehrichtung (14) durch den Motor (13),
- Betätigen (102) des optischen Instrumentes (12) durch das erste Stellglied (15) in Drehbewegung um die erste Achse (Z) in Bezug auf den Rahmen (21) in eine zweite Drehrichtung (16), welche zur ersten Drehrichtung (14) gegenläufig ist, durch Verschieben des ersten Endes (41) in Bezug auf das zweite Ende (42), um so das optische Instrument (12) an einer ersten Position unter der Vielzahl von aufeinanderfolgenden Positionen zu verlangsamen oder zu immobilisieren.

10. Verfahren nach Anspruch 9, **dadurch gekennzeichnet, dass** es zudem einen Schritt (103) des Betätigens durch das erste Stellglied (15) des optischen Instrumentes (12) in Rotation um die erste Achse (Z) in Bezug auf den Rahmen (21) in die erste Drehrichtung (14) beinhaltet, um von einer ersten Position zu einer darauffolgenden Position der Vielzahl von aufeinanderfolgenden Positionen zu gelangen.

11. Verfahren nach Anspruch 10, **dadurch gekennzeichnet, dass** es nach dem Schritt (103) des Betätigens durch das erste Stellglied (15) des optischen Instrumentes (12) in Rotation um die erste Achse (Z) in Bezug auf den Rahmen (21) in die erste Drehrichtung (14), um von einer ersten Position zu einer darauffolgenden Position der Vielzahl von aufeinanderfolgenden Positionen zu gelangen, den Schritt (102) des Betätigens durch das erste Stellglied (15) des optischen Instrumentes (12) in Rotation um die erste Achse (Z) in Bezug auf den Rahmen (21) in eine zweite Drehrichtung (16) beinhaltet, welche gegenläufig zur ersten Drehrichtung (14) ist, um das optische Instrument (12) in einer Position unter der Vielzahl von aufeinanderfolgenden Positionen zu verlangsamen oder zu immobilisieren.

## Claims

1. Dual-drive device (10, 20, 30, 40) for sequential scanning, comprising:
- a moving part (11) comprising a frame (21) and an optical instrument (12) that is positioned on the frame (21) and is rotatable about a first axis (Z) with respect to the frame (21) so as to be immobilized in a plurality of successive positions about the first axis (Z),
- a motor (13) configured to make the moving part (11) rotatable about the first axis (Z) in a first direction of rotation (14) at a constant speed,
**characterized in that** the moving part (11) comprises a first actuator (15) positioned on the frame (21) which comprises a first end (41) and a second end (42), the first end (41) being secured to the frame (21), the second end (42) being connected to the optical instrument (12), and configured to move the first end (41) in translation relative to the second end (42) so as to actuate the rotation of the optical instrument (12) about the first axis (Z) with respect to the frame (21) in the first direction of rotation (14) in order to pass from a first position to a successive position from the plurality of successive positions, and in a second direction of rotation (16), opposite to the first direction of rotation (14), in order to slow down or immobilize the optical instrument (12) in the successive position.

2. Device (30, 40) according to Claim 1, **characterized in that** the moving part (11) also comprises:
- a counter-inertia device (31) that is rotatable about the first axis (Z) with respect to the frame (21),
- a second actuator (32) positioned on the frame (21) and configured to actuate the rotation of the counter-inertia device (31) about the first axis (Z) with respect to the frame (21) in the first direction of rotation (14) or second direction of rotation (16), conversely to the direction of rotation of the optical instrument (12).

3. Device (30) according to Claim 2, **characterized in that** the first actuator (15) and the second actuator (32) are aligned.

4. Device (30) according to Claim 2 or 3, **characterized in that** the first actuator (15) and the second actuator (32) are identical.

5. Device (30) according to any one of Claims 2 to 4, **characterized in that** the first actuator (15) and the second actuator (32) are piezoelectric actuators.

6. Device (40) according to Claim 1, **characterized in that** the moving part (11) also comprises:
- a counter-inertia device (31) that is rotatable about the first axis (Z) with respect to the frame (21),
and **in that** the first actuator (15) is configured to actuate the rotation of the counter-inertia device (31) about the first axis (Z) with respect to the frame (21) in the first direction of rotation (14) or second direction of rotation (16), conversely to the direction of rotation of the optical instrument (12).

7. Device (40) according to Claim 6, **characterized in that** the first actuator (15) comprises a first end (41), and a second end (42), the first end (41) being connected to the counter-inertia device (31), the second end (42) being connected to the optical instrument (12), and **in that** the first actuator (15) comprises a central mechanical interface secured to the frame (21), such that the first end (41) drives the counter-inertia device (31) in rotation about the first axis (Z) with respect to the frame (21) in a direction opposite to the direction of rotation of the optical instrument (12).

8. Piece of space equipment (50) comprising a device (10, 20, 30, 40) according to one of the preceding claims.

9. Dual-drive method for sequential scanning of a device (10, 20, 30, 40) comprising:
- a moving part (11) comprising a frame (21) and an optical instrument (12) that is positioned on the frame (21) and is rotatable about a first axis (Z) with respect to the frame (21) so as to be slowed down or immobilized in a plurality of successive positions about the first axis (Z),
- a motor (13),
the moving part (11) comprising a first actuator (15) comprising a first end (41) and a second end (42), the first end (41) being secured to the frame (21), the second end (42) being connected to the optical instrument (12),
**characterized in that** the method comprises the following steps:
- setting (101) the moving part (11) in rotation at a constant speed about the first axis (Z) in a first direction of rotation (14) by way of the motor (13),
- actuating (102), by way of the first actuator (15), the rotation of the optical instrument (12) about the first axis (Z) with respect to the frame (21) in a second direction of rotation (16), opposite to the first direction of rotation (14), by the first end (41) being moved in translation with respect to the second end (42), so as to slow down or immobilize the optical instrument (12) in a first position from among the plurality of successive positions.

10. Method according to Claim 9, **characterized in that** it also comprises a step (103) of actuating, by way of the first actuator (15), the rotation of the optical instrument (12) about the first axis (Z) with respect to the frame (21) in the first direction of rotation (14) in order to pass from a first position to a successive position from the plurality of successive positions.

11. Method according to Claim 10, **characterized in that** it comprises, after the step (103) of actuating, by way of the first actuator (15), the rotation of the optical instrument (12) about the first axis (Z) with respect to the frame (21) in the first direction of rotation (14) in order to pass from a first position to a successive position from the plurality of successive positions, the step (102) of actuating, by way of the first actuator (15), the rotation of the optical instrument (12) about the first axis (Z) with respect to the frame (21) in a second direction of rotation (16), opposite to the first direction of rotation (14), so as to slow down or immobilize the optical instrument (12) in a position from among the plurality of successive positions.
